# FASCICULE DE BREVET EUROPEEN

(11) **EP 3 490 787 B1**
(45) Date de publication et mention de la délivrance du brevet: **02.09.2020**
(21) Numéro de dépôt: 17754758.5
(22) Date de dépôt: 27.07.2017
(51) Int. Cl.: B29D 30/06

(54) **MOULE DE VULCANISATION POUR PNEUMATIQUE ET PROCÉDÉ D'ASSEMBLAGE DES GARNITURES DU MOULE.**
VULKANISATIONSFORM FÜR REIFEN UND FORMELEMENTE ZUSAMMENSETZUNGSVERFAHREN.
VULCANIZATION MOLD FOR TIRES AND METHOD OF FORMING ASSEMBLY ELEMENTS THEREOF.

(30) Priorité: 28.07.2016 FR 1657302
(43) Date de publication de la demande: 05.06.2019
(73) Titulaire: Compagnie Générale des Etablissements Michelin, 63000 Clermont-Ferrand (FR)
(72) Inventeur: MARCHADIER, Denis, 63040 Clermont-Ferrand Cedex 9 (FR)
(74) Mandataire: Noel, Luminita
(86) Numéro de dépôt international: PCT/FR2017/052121
(87) Numéro de publication internationale: WO 2018/020178

(56) Documents cités:
- WO-A1-2010/049960
- CN-A- 101 279 488
- FR-A1- 2 832 091
- US-A1- 2007 018 349
- US-A1- 2008 191 389

## Description

La présente invention se rapporte aux moules de vulcanisation pour pneumatiques, et plus précisément aux moules du type à secteurs. Les moules de vulcanisation assurent la vulcanisation du pneumatique par une mise sous pression et un apport de calories à une ébauche de pneumatique. Les moules de vulcanisation du type à secteurs sont réalisés en plusieurs pièces assemblées et animées par une cinématique appropriée en relation avec la presse de cuisson.

Les moules de vulcanisation comprennent généralement des secteurs mobiles radialement par rapport à l'axe central du moule. Dans un tel moule de vulcanisation, l'espace de moulage de la surface extérieure du pneumatique est défini par deux coquilles, assurant chacune le moulage d'un flanc, et par une couronne de secteurs ou deux couronnes de demi secteurs assurant le moulage de la bande de roulement. Dans les moules de vulcanisation à secteurs mobiles radialement, les secteurs sont souvent entraînés en un mouvement d'ouverture et de fermeture par le mouvement axial d'une couronne de fermeture ayant une surface intérieure de forme tronconique qui coopère avec la surface radialement extérieure de forme tronconique des secteurs.

Les secteurs comprennent la plupart du temps une partie radialement interne appelée généralement garniture, dont la surface interne présente un relief qui correspond au négatif de la bande de roulement après moulage, et une partie radialement externe qui sert de support à la garniture. Les garnitures sont réalisées en un alliage d'aluminium par des techniques de fonderie et les supports généralement en acier, en fonte voire en un alliage d'aluminium. On peut ainsi réaliser une garniture soit monobloc, soit sous forme de plusieurs éléments individuels détachables qui sont agencés l'un à la suite de l'autre puis assemblés, la garniture étant fixée généralement de manière détachable sur le support de secteur.

Le document KR20000006268 décrit un moule dans lequel les garnitures sont fixées à leurs supports respectifs à l'aide des vis de fixation. Cela s'avère fastidieux à assembler lorsque la garniture comporte plusieurs éléments individuels.

Le document US 2008/0191389 décrit un moule comportant des secteurs mobiles radialement dans lequel un secteur est constitué de plusieurs garnitures agencées l'une contre l'autre moyennant des ressorts de compression et tenues à l'aide des butées d'extrémité et des vis de fixation. Cette solution de fixation de garnitures implique l'utilisation de plusieurs pièces dont le montage et le démontage sont peu aisés. Cela s'avère pénalisant lorsque l'on doit changer souvent les garnitures du moule et surtout pour des moules comportant des secteurs réalisés en deux parties séparées axialement.

On connaît également le document FR 2832091 dans lequel les secteurs sont réalisés en deux parties en étant séparés axialement par un plan médian. Les garnitures sont réalisées sous forme de groupes de tôles assemblées et maintenues ensemble dans un support commun. La fixation des tôles sur le support se fait à l'aide d'une bride de fixation dont une extrémité vient en prise avec une rainure de tôle et l'autre est vissée au support. Dans un moule qui comporte généralement de nombreux secteurs, cette solution implique l'utilisation de nombreuses brides et vis de fixation et dont l'assemblage prend beaucoup de temps tout en étant coûteux à fabriquer.

De surcroît, lorsqu'on applique une telle solution à la fixation des garnitures au support, les garnitures étant réalisées soit sous forme d'un assemblage de tôles comme dans le document précédent soit sous forme d'éléments individuels détachables agencés l'un à la suite de l'autre, on s'aperçoit qu'elle pose des problèmes lors du moulage des pneus fortement lamellisés. Cette solution ne convient pas au moulage des pneus fortement lamellisés dont la bande de roulement comporte un nombre important d'entailles qui sont parfois assez profondes. En effet, les efforts de démoulage lors de l'ouverture du moule sont très importants dans ce cas et sollicitent les éléments de garniture au niveau de leur fixation au support. La fixation peut alors céder, ce qui provoque de problèmes au démoulage et nécessite le remplacement des éléments individuels et/ou de leur fixation. Enfin, le document CN 101 279 488 A montre un moule pour pneumatique dans lequel les garnitures sont assemblées en étant "empilées"axialement et maintenue ensemble par des tige filetées traversantes.

Un objectif de l'invention est de remédier aux inconvénients des documents précités et d'apporter une solution originale pour permettre d'améliorer la fixation d'une garniture sur le support d'un secteur de moule.

Cet objectif est atteint par l'invention qui propose un moule de vulcanisation pour pneumatique comportant plusieurs secteurs qui sont adjacents circonferentiellement et sont mobiles radialement entre une position de fermeture et une position d'ouverture du moule, chaque secteur comportant une garniture monobloc ou comprenant plusieurs éléments individuels, la garniture étant montée de manière détachable par rapport au support, la garniture comportant une partie radialement interne destinée au moulage et une partie radialement externe de contact avec le support, caractérisé en ce que la garniture est maintenue en position radialement en étant fixée au support au moyen d'au moins un élément filaire métallique intercalé entre la garniture et le support.

Autrement dit, le moule comprend plusieurs secteurs mobiles radialement en étant agencés en couronne autour d'un axe de symétrie ou central du moule et étant mobiles radialement par rapport à celui-ci, chaque secteur de moule étant obtenu par l'assemblage démontable d'une garniture monobloc ou comportant plusieurs éléments individuels sur un support de secteur. Le support comporte dans ce but une partie radialement interne de réception de la garniture et une partie radialement externe qui coopère avec des moyens d'actionnement en mouvement du secteur. Le maintien en position circonférentielle de la garniture par rapport au support est réalisé par une fixation circonférentielle de type connu, par exemple à vis et rondelle de fixation. Selon l'invention, le maintien en position radiale est effectué au moyen d'un élément filaire métallique intercalé entre la garniture et son support. Par maintien en position radiale on comprend un maintien permettant à la garniture d'encaisser les efforts radiaux d'arrachement qui s'exercent sur celle-ci lors du démoulage. Un tel élément filaire métallique est disposé entre la garniture, ou chaque élément individuel qui la compose, et le support au sein du secteur et sur la circonférence de celui-ci, on comprend à distance de la partie radialement interne de moulage de la garniture. Ceci permet d'éviter de solliciter la partie moulante et de prolonger la durée de vie de celle-ci. Un tel élément filaire doit être suffisamment élastique ou souple pour pouvoir s'adapter à la forme de la garniture et du support, mais suffisamment rigide pour reprendre les efforts subis lors du démoulage et pour résister aux montages et démontages successifs.

Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé.

Un tel élément filaire est de préférence réalisé en une seule pièce pour couvrir la longueur du secteur, voire commun à plusieurs et de préférence à tous les éléments individuels qui composent la garniture d'un secteur, ce qui permet d'avoir une fixation unique et simplifiée, le nombre de pièces et l'usinage des surfaces de l'assemblage étant nettement réduits.

De surcroît, en comparaison aux solutions connues et tel que vu en section axiale, l'élément filaire dont la section transversale est assez faible par rapport à sa longueur permet d'aménager une surface de contact proche du plan médian des secteurs, entre le support et la garniture au niveau de l'extrémité du support, ce qui assure un meilleur transfert thermique lors de la cuisson.

De préférence, ledit élément filaire est serré axialement entre la garniture et le support. Les efforts axiaux de fixation sont ainsi repris par l'élément filaire, ce qui permet de prolonger la durée de vie des pièces actives du moule. Une telle fixation peut se faire à l'aide des vis de fixation ou par un assemblage forcé des composants.

Avantageusement, ledit élément filaire est inséré dans un conduit défini par deux rainures se faisant face, l'une étant pratiquée dans la garniture et l'autre dans le support.

On obtient ainsi un canal de réception de l'élément filaire en usinant des rainures ouvertes se faisant face dans chacune des pièces qu'on assemble ensuite par fixation au moyen de l'élément filaire.

De préférence, le contact entre l'élément filaire et la garniture se fait selon un plan incliné. Un tel plan incliné fait un angle inférieur ou égal à 45° avec un plan perpendiculaire à l'axe du moule. Ceci afin de privilégier de plaquer la garniture contre le support de secteur par la décomposition des forces sur le plan incliné. Par ailleurs, l'angle de contact entre l'élément filaire et le support est très faible (égal ou inférieur à 10°) et doit, lui, être inférieur à l'angle du plan incliné de contact avec la garniture, afin d'éviter le glissement de l'élément filaire sous les efforts appliqués.

Lors de la fixation axiale des éléments individuels sur leur support, l'effort axial repris par l'élément filaire est transmis à l'élément individuel sur un plan incliné, ce qui fait que la résultante des forces sur la paroi du conduit et donc de l'élément individuel permet de le plaquer sur le support. Cette résultante étant de sens opposé à l'effort de démoulage subi par les éléments individuels lors de l'extraction du pneu en fin de cuisson assure une bonne tenue de ces éléments au sein du moule même dans le cas des pneus fortement lamellisés.

Avantageusement, ledit élément filaire est monofilament.

De préférence, la section de dudit élément filaire est circulaire.

Lorsqu'il est de forme circulaire, son diamètre est compris entre 2 à 6mm et de préférence égal à 5mm.

Avantageusement, ledit élément filaire est élastique. Ceci permet à l'élément filaire de prendre la forme en arc de cercle du canal circonférentiel dans lequel il est inséré.

Dans un mode préféré de réalisation de l'invention, le moule comprend deux séries de secteurs séparés axialement par un plan médian radial.

Avantageusement, ledit élément filaire est fixé à l'aide de vis de serrage insérées en direction de l'élément filaire à partir dudit plan médian. Ceci permet une fixation rapide et aisée de l'élément filaire.

L'invention a également pour objet un procédé d'assemblage d'un secteur de moule pour pneumatique, ledit moule comportant plusieurs secteurs qui sont adjacents circonferentiellement et mobiles radialement entre une position de fermeture et une position d'ouverture du moule, chaque secteur comportant une garniture montée de manière détachable par rapport au support, la garniture comportant une partie radialement interne destinée au moulage et une partie radialement externe au contact du support, caractérisé en ce que :
- on place la garniture dans le support et
- on intercale au moins un élément filaire métallique entre la garniture et le support.

De préférence, la garniture comprend un ensemble d'éléments individuels qu'on enfile sur le support avant d'insérer un élément filaire métallique dans un conduit réalisé entre chaque élément individuel et le support de manière à ce qu'il traverse tous les éléments de la garniture.

Les buts de l'invention sont également atteints avec un procédé de vulcanisation d'un pneumatique réalisé à l'aide d'un moule selon l'invention.

L'invention sera mieux comprise grâce à la suite de la description, qui s'appuie sur les figures suivantes :
- la figure 1 est une vue en perspective avec arrachement partiel d'un secteur de moule selon un premier mode de réalisation de l'invention ;
- la figure 2 est une vue en en perspective du secteur de la figure 1 selon un autre angle de vue,
- la figure 3 est une vue de dessus du secteur de la figure 2 ;
- la figure 4 est une vue en coupe réalisée avec le plan A-A de la figure 3 ;
- la figure 5a est une vue en perspective d'un secteur de moule selon un autre mode de réalisation de l'invention et la figure 5b est une vue à échelle agrandie du détail B de la figure 5a.

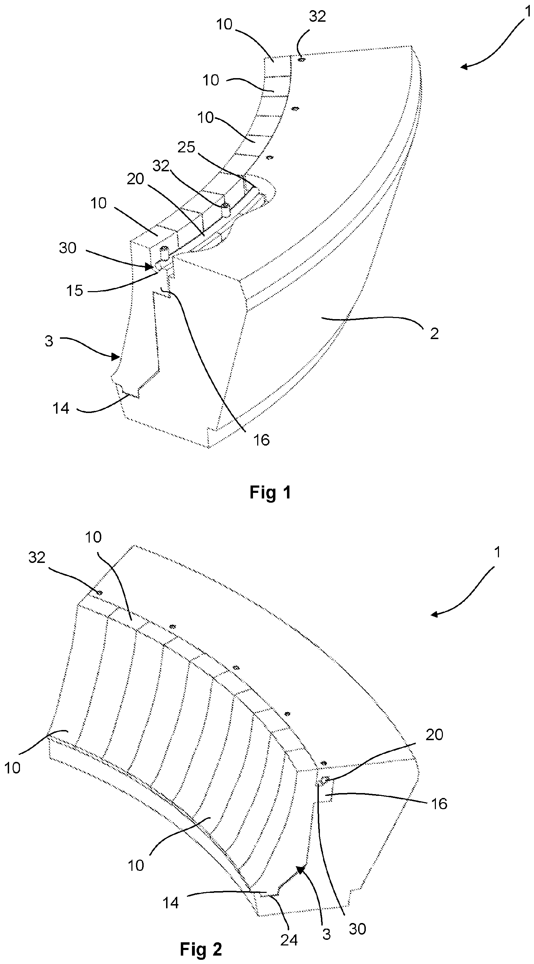

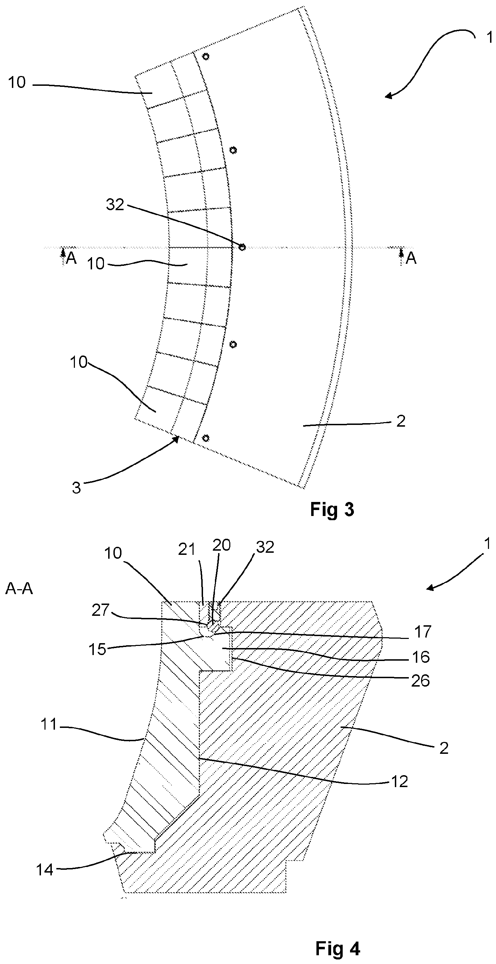

Sur les différentes figures, les éléments identiques ou similaires portent la même référence. Leur description n'est donc pas systématiquement reprise. Les figures 1 à 4 illustrent uniquement un secteur inférieur de moule correspondant à un premier mode de réalisation de l'invention. Il est connu dans l'état de la technique que les secteurs supérieurs sont l'image en miroir des secteurs inférieurs. Ainsi, la description qui suit s'applique de la même manière aux secteurs supérieurs et aux secteurs inférieurs d'un moule comportant deux séries de secteurs, supérieurs et inférieurs, séparés par un plan médian radial.

De manière généralement connue, un moule de vulcanisation comprend plusieurs secteurs 1 qui sont agencés côté à côte circonférentiellement autour de l'axe de symétrie ou central du moule et forment un anneau, les secteurs étant mobiles radialement lorsqu'ils sont actionnés par une couronne de fermeture. Les directions radiale, axiale et circonférentielle sont définies par rapport à l'axe central du moule. Ainsi, la direction radiale est une direction perpendiculaire à l'axe central du moule, la direction axiale est une direction parallèle à celui-ci et la direction circonférentielle est une direction qui correspond à une direction tangente à tout cercle centré sur l'axe central du moule. La couronne de fermeture a une surface radialement intérieure de forme tronconique qui coopère avec la surface radialement extérieure de forme tronconique des secteurs. Ainsi, chaque secteur est mobile radialement lorsqu'il glisse le long des surfaces inclinées de la couronne de fermeture entre une position radialement intérieure de fermeture du moule et une position radialement extérieure d'ouverture du moule. Les secteurs sont guidés et maintenus sur la couronne à l'aide des outillages du type décrits dans le document WO 2010019134 au nom des demanderesses, non représentés ici. En position de fermeture du moule, la partie radialement intérieure des secteurs vient au contact des coquille de moulage du flanc de pneumatique et assurent le moulage du pneumatique.

Les figures 1 et 2 illustrent par des vues en perspective un secteur 1 de moule de pneumatique selon un premier mode de réalisation de l'invention, secteur qui comporte un support 2, en général en acier ou en fonte ou en un alliage d'aluminium et une garniture de moulage 3, en général en un alliage d'aluminium. Le support 2 a une forme générale en secteur de cercle, il forme une enveloppe ouverte pour la garniture qu'il entoure circonférentiellement et supporte dans la direction radiale sur son pourtour et axiale au niveau de sa base. La dimension axiale du support 2 est supérieure à celle de la garniture et la dimension circonférentielle du support est égale à celle de la garniture. Le secteur 1 comprend ici plusieurs éléments individuels 10 montés de manière détachable par rapport au support 2. Un élément individuel 10 présente une partie radialement interne 11 destinée au moulage et une partie radialement externe 12 qui vient en prise avec la partie radialement intérieure du support 2 au sein duquel est montée la garniture. La partie radialement interne 11 de chaque élément individuel 10 présente un motif de moulage propre, l'ensemble des motifs des éléments individuels 10 formant la garniture 3 d'un secteur 1. En vue de son montage au support, chaque élément individuel 10 comporte un talon 14, agencé au niveau de sa base, et au moyen duquel il est monté sur le support 2 en étant guidé et maintenu radialement dans une rainure de guidage circonférentiel et radial 24 du support 2. L'élément individuel 10 comporte par ailleurs une protubérance radiale 16, qui fait saillie au niveau de sa face radialement externe et au moyen de laquelle il est guidé dans une rainure de guidage 26 axial et circonférentiel du support 2.

Selon l'invention, les éléments individuels 10 sont montés de manière amovible sur le support 2 au moyen d'un élément filaire métallique 20 intercalé entre les éléments individuels 10 de la garniture 3 et le support 2. Plus particulièrement, l'élément filaire 20 est agencé dans un conduit circonférentiel 30 défini par deux rainures 15, 25 se faisant face. Le conduit circonférentiel 30 s'étend dans la direction circonférentielle du moule et a une forme en arc de cercle de longueur égale à celle du secteur 1. Une première rainure 15 est réalisée au niveau de la protubérance radiale 16 de la partie radialement externe 12 de chaque élément individuel 10. La deuxième rainure 25 est réalisée au niveau de l'extrémité 21 du support 2 et débouche dans la rainure de guidage 26. L'élément filaire métallique 20 est serré axialement entre lesdits éléments individuels 10 et leur support 2 à l'aide des vis de fixation 32.

Selon un aspect avantageux de l'invention, la première rainure 15 présente une paroi inclinée 17 qui forme une surface d'appui pour l'élément filaire 20. La rainure 15 est ainsi usinée de manière à présenter une paroi de fond en arc de cercle ou rectiligne et l'une des parois latérales, celle qui est la plus proche du support 2, inclinée. Lorsque l'on serre les vis 32, elles traversent le support 2 et poussent l'élément filaire 20 au contact de la paroi inclinée 17. Ainsi, lorsqu'on applique un effort axial orienté vers la base du support 2, la résultante de cet effort avec la normale sur la surface d'appui de la paroi inclinée 17 est orientée radialement vers l'extérieur. Ceci permet de plaquer les éléments individuels 10 sur leur support 2 et d'assurer un bon maintien en place notamment lorsque des efforts de démoulage importants leurs sont appliqués. Le nombre des vis de serrage 32 est avantageusement inférieur au nombre d'éléments individuels 10. La rainure 25 pratiquée dans la paroi interne du support 2 est usinée de manière à présenter une paroi de fond en arc de cercle ou rectiligne et une paroi de contact 27 avec l'élément filaire qui peut être verticale ou légèrement inclinée. Lorsqu'elle est inclinée, cette paroi de contact 27, fait un angle égal ou inférieur à 10° avec un plan axial. Cet angle est bien entendu inférieur à l'angle de la paroi inclinée 17 afin d'éviter le glissement de l'élément filaire 20 sous les efforts appliqués.

L'élément filaire 20 est métallique. L'élément filaire est élastique afin qu'il puisse prendre la forme du canal circonférentiel 30 en arc de cercle à l'intérieur du secteur 1 lors du montage. De préférence, l'élément filaire est en acier et est éventuellement revêtu d'une couche métallique ou polymérique.

Dans une réalisation avantageuse de l'invention, l'élément filaire 20 est un fil d'acier trempé de type corde à piano contenant de 0,8 % à 1 % de carbone dont la résistance à la traction Rm est > 1600MPa et la dureté de surface est > 41HRC. Ce fil est choisi parmi les aciers étirés à froid, à résistance à la traction élevée, par exemple de type ASTM A228 ou AMS 5112.

Dans un mode de réalisation, l'élément filaire est un monofilament. Dans un autre mode de réalisation, l'élément filaire est un assemblage de plusieurs monofilaments, par exemple assemblés par câblage ou retordage.

De préférence, la section de dudit élément filaire 20 est circulaire. Lorsqu'il est de forme circulaire, son diamètre est compris dans un domaine allant de 2 à 6mm et de préférence égal à 5mm.

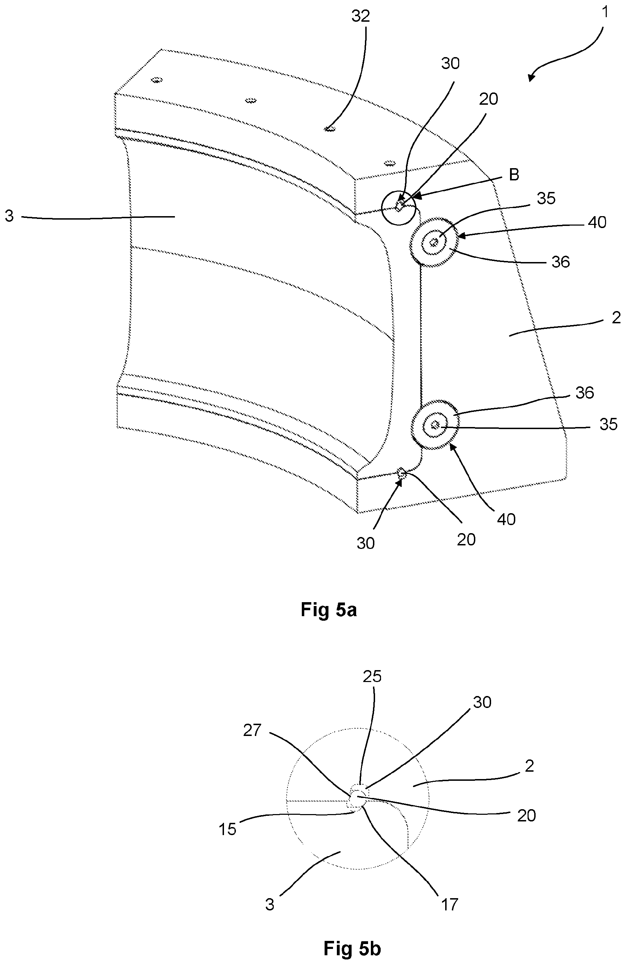

Les figures 5a et 5b illustrent un secteur de moule selon un deuxième mode de réalisation de l'invention. Le moule comprend plusieurs secteurs 1 mobiles radialement et agencés circonférentiellement autour d'un axe central du moule, un secteur comportant une garniture 3 dont la surface radialement intérieure est apte à mouler toute la largeur de la bande de roulement d'un pneumatique. Le secteur 1 comprend une garniture 3 monobloc fixée sur un support 2 qui est du type précédemment décrit. La garniture 3 est fixée au secteur 2 dans la direction circonférentielle au moyen d'éléments de fixation 40 comportant chacun une vis 35 et une rondelle 36. Deux éléments de fixation 40 sont ainsi utilisés pour fixer chaque côté latéral de la garniture 3 sur le support 2. Il est bien sûr admis que le nombre de fixations 40 peut être adapté en fonction de la taille des secteurs.

Selon l'invention, la garniture 3 est fixée radialement au support 2 au moyen d'un élément filaire métallique 20 agencé dans un conduit circonférentiel 30 pratiqué à l'interface entre la garniture 3 et le support 2. Deux tels conduits circonférentiels 30 sont prévus, l'un en partie supérieure de la garniture et l'autre en la partie inférieure de celle-ci pour un meilleur guidage et une meilleure reprise des efforts de démoulage.

La figure 5b illustre le détail B de la figure 5a à échelle agrandie. On observe ainsi que le conduit circonférentiel 30 est réalisé par la jonction de deux rainures, une première 15 pratiquée dans la garniture 3 et une deuxième 25 pratiquée dans le support 2, les rainures présentant des parois inclinée 17 et de contact 27 comme précédemment décrit.

Dans une variante, non illustrée dans les dessins, la garniture 3 de la figure 5a peut comprendre plusieurs éléments individuels 10 assemblés et ensuite montés sur le support 2.

Dans une autre variante, la fixation de la garniture 3 sur le support 2 se fait par un assemblage ajusté, les rainures 15 et 25 ayant des dimensions reproduisant exactement la taille et la forme de l'élément filaire.

D'autres variantes et modes de réalisation de l'invention peuvent être envisagés sans sortir du cadre de ses revendications.

Ainsi, on peut utiliser un élément filaire de forme prismatique en contact avec une paroi inclinée ou concave du canal circonférentiel. On peut également utiliser un élément filaire en plusieurs parties.

## Revendications

1. Moule de vulcanisation pour pneumatique comportant plusieurs secteurs (1) qui sont adjacents circonférentiellement et sont mobiles radialement entre une position de fermeture et une position d'ouverture du moule, chaque secteur (1) comportant une garniture (3) monobloc ou comprenant plusieurs éléments individuels (10), la garniture (3) étant montée de manière détachable par rapport à un support (2), la garniture (3) comportant une partie radialement interne destinée au moulage et une partie radialement externe de contact avec le support (2), **caractérisé en ce que** la garniture (3) est maintenue en position radialement en étant fixée au support (2) au moyen d'au moins un élément filaire (20) métallique intercalé entre la garniture et le support.

2. Moule selon la revendication 1, **caractérisé en ce que** ledit élément filaire (20) est serré axialement entre la garniture (3) et le support (2).

3. Moule selon la revendication 1, **caractérisé en ce que** ledit élément filaire (20) est agencé dans un conduit circonférentiel (30) défini par deux rainures (15, 25) se faisant face l'une étant pratiquée dans la garniture (3) et l'autre dans le support (2).

4. Moule selon l'une des revendications 1 à 3, **caractérisé en ce que** le contact entre l'élément filaire (20) et la garniture (3) se fait selon un plan incliné.

5. Moule selon l'une des revendications précédentes, **caractérisé en ce que** ledit élément filaire (20) est monofilament.

6. Moule selon l'une des revendications précédentes, **caractérisé en ce que** la section de dudit élément filaire (20) est circulaire.

7. Moule selon l'une des revendications précédentes, **caractérisé en ce que** ledit élément filaire est élastique.

8. Moule selon l'une des revendications précédentes, **caractérisé en ce que** qu'il comprend deux séries de secteurs séparés axialement par un plan médian radial.

9. Moule selon la revendication 8, **caractérisé en ce que** ledit élément filaire(20) est fixé à l'aide des vis de serrage (32) insérées dans le support (2) à partir dudit plan médian.

10. Procédé d'assemblage d'un secteur de moule pour pneumatique, ledit moule comportant plusieurs secteurs (1) adjacents circonférentiellement et mobiles radialement entre une position de fermeture et une position d'ouverture du moule, chaque secteur (1) comportant une garniture (3) montée de manière détachable par rapport au support (2), la garniture (3) comportant une partie radialement interne destinée au moulage et une partie radialement externe au contact du support (2), **caractérisé en ce que** :
- on place la garniture (3) dans le support (2) et
- on intercale au moins un élément filaire (20) métallique entre la garniture (3) et le support (2).

11. Procédé selon la revendication 10, **caractérisé en ce que** la garniture comprend un ensemble d'éléments individuels (10) qu'on dispose sur le support avant d'insérer un élément filaire métallique dans un conduit circonférentiel (30) réalisé entre chaque élément individuel (10) et le support (2) de manière à ce qu'il traverse tous les éléments de la garniture.

12. Procédé de vulcanisation d'un pneumatique à l'aide d'un moule selon l'une des revendications 1 à 9.

## Patentansprüche

1. Vulkanisierungsform für einen Luftreifen, die mehrere Sektoren (1) aufweist, die in Umfangsrichtung benachbart und radial zwischen einer Schließstellung und einer Öffnungsstellung der Form beweglich sind, wobei jeder Sektor (1) einen einstückigen oder mehrere einzelne Elemente (10) enthaltenden Einsatz (3) aufweist, wobei der Einsatz (3) bezüglich eines Trägers (2) lösbar montiert ist, wobei der Einsatz (3) einen radial inneren Teil, der für das Formen bestimmt ist, und einen radial äußeren Teil zum Kontakt mit dem Träger (2) aufweist, **dadurch gekennzeichnet, dass** der Einsatz (3) radial in Stellung gehalten wird, indem er am Träger (2) mittels mindestens eines metallischen Drahtelements (20) befestigt wird, das zwischen den Einsatz und den Träger eingefügt wird.

2. Form nach Anspruch 1, **dadurch gekennzeichnet, dass** das Drahtelement (20) axial zwischen den Einsatz (3) und den Träger (2) eingespannt wird.

3. Form nach Anspruch 1, **dadurch gekennzeichnet, dass** das Drahtelement (20) in einem Umfangskanal (30) angeordnet ist, der von zwei einander gegenüberliegenden Rillen (15, 25) definiert wird, von denen die eine im Einsatz (3) und die andere im Träger (2) angebracht ist.

4. Form nach einem der Ansprüche 1 bis 3, **dadurch gekennzeichnet, dass** der Kontakt zwischen dem Drahtelement (20) und dem Einsatz (3) gemäß einer geneigten Ebene erfolgt.

5. Form nach einem der vorhergehenden Ansprüche, **dadurch gekennzeichnet, dass** das Drahtelement (20) ein Monofilament ist.

6. Form nach einem der vorhergehenden Ansprüche, **dadurch gekennzeichnet, dass** der Querschnitt des Drahtelements (20) kreisförmig ist.

7. Form nach einem der vorhergehenden Ansprüche, **dadurch gekennzeichnet, dass** das Drahtelement elastisch ist.

8. Form nach einem der vorhergehenden Ansprüche, **dadurch gekennzeichnet, dass** sie zwei Reihen von Sektoren enthält, die axial durch eine radiale Mittelebene getrennt sind.

9. Form nach Anspruch 8, **dadurch gekennzeichnet, dass** das Drahtelement(20) mit Hilfe der ausgehend von der Mittelebene in den Träger (2) eingeführten Spannschrauben (32) befestigt wird.

10. Verfahren zum Zusammenbau eines Formsektors für einen Luftreifen, wobei die Form mehrere in Umfangsrichtung benachbarte und radial zwischen einer Schließstellung und einer Öffnungsstellung der Form bewegliche Sektoren (1) aufweist, wobei jeder Sektor (1) einen Einsatz (3) aufweist, der bezüglich des Trägers (2) lösbar montiert ist, wobei der Einsatz (3) einen zum Formen bestimmten radial inneren Teil und einen äußeren Teil in Kontakt mit dem Träger (2) aufweist, **dadurch gekennzeichnet, dass**:
- der Einsatz (3) im Träger (2) platziert wird, und
- mindestens ein metallisches Drahtelement (20) zwischen den Einsatz (3) und den Träger (2) eingefügt wird.

11. Verfahren nach Anspruch 10, **dadurch gekennzeichnet, dass** der Einsatz eine Einheit von einzelnen Elementen (10) enthält, die auf dem Träger angeordnet werden, ehe ein metallisches Drahtelement in einen Umfangskanal (30) eingeführt wird, der zwischen jedem einzelnen Element (10) und dem Träger (2) so hergestellt wird, dass er alle Elemente des Einsatzes durchquert.

12. Verfahren zur Vulkanisierung eines Luftreifens mit Hilfe einer Form nach einem der Ansprüche 1 bis 9.

## Claims

1. Mould for vulcanizing tyres, comprising several segments (1) which are circumferentially adjacent and able to move radially between a mould-closed and a mould-open position, each segment (1) comprising an insert (3) made as one piece or comprising several individual elements (10), the insert (3) being mounted detachably with respect to a support (2), the insert (3) comprising a radially internal part intended for moulding and a radially external part for contact with the support (2), **characterized in that** the insert (3) is held in position radially by being fixed to the support (2) by means of at least one metallic filamentary element (20) inserted between the insert and the support.

2. Mould according to Claim 1, **characterized in that** the said filamentary element (20) is clamped axially between the insert (3) and the support (2).

3. Mould according to Claim 1, **characterized in that** the said filamentary element (20) is arranged in a circumferential passage (30) defined by two grooves (15, 25) facing one another, one being made in the insert (3) and the other in the support (2).

4. Mould according to one of Claims 1 to 3, **characterized in that** contact between the filamentary element (20) and the insert (3) is along an inclined plane.

5. Mould according to one of the preceding claims, **characterized in that** the said filamentary element (20) is a monofilament.

6. Mould according to one of the preceding claims, **characterized in that** the cross section of of the said filamentary element (20) is circular.

7. Mould according to one of the preceding claims, **characterized in that** the said filamentary element is elastic.

8. Mould according to one of the preceding claims, **characterized in that** it comprises two series of segments axially separated by a radial midplane.

9. Mould according to Claim 8, **characterized in that** the said filamentary element (20) is fixed by clamping screws (32) which are inserted into the support (2) from the said midplane.

10. Method for assembling a tyre mould segment, the said mould comprising several segments (1) which are circumferentially adjacent and able to move radially between a mould-closed position and a mould-open position, each segment (1) comprising an insert (3) mounted detachably relative to the support (2), the insert (3) comprising a radially internal part intended for moulding and a radially external part in contact with the support (2), **characterized in that**:
- the insert (3) is placed in the support (2) and
- at least one metallic filamentary element (20) is interposed between the insert (3) and the support (2).

11. Method according to Claim 10, **characterized in that** the insert comprises a collection of individual elements (10) which is arranged on the support before a metallic filamentary element is inserted into a circumferential passage (30) produced between each individual element (10) and the support (2) so that it passes through all the elements of the insert.

12. Method for vulcanizing a tyre using a mould according to one of Claims 1 to 9.
